# EUROPÄISCHE PATENTSCHRIFT

(11) **EP 0 691 170 B1**
(45) Veröffentlichungstag und Bekanntmachung des Hinweises auf die Patenterteilung: **07.01.1999**
(21) Anmeldenummer: 95110070.0
(22) Anmeldetag: 28.06.1995
(51) Int. Cl.: B23D 61/02

(54) **Sägeblatt mit konvex geschliffenen Sägezahnflanken**
Saw blade with convex ground saw teeth sides
Lame de scie avec moulage convexe des flancs de denture de scie

(30) Priorität: 05.07.1994 DE 4423434
(43) Veröffentlichungstag der Anmeldung: 10.01.1996
(73) Patentinhaber: Röhm GmbH, 64293 Darmstadt (DE)
(72) Erfinder: Fritz, Heinz, D-89542 Herbrechtingen (DE); Riedel, Otmar, D-64395 Brensbach (DE)

(56) Entgegenhaltungen:
- WO-A-94/20271
- DE-A- 2 516 137
- DE-A- 2 706 774
- DE-A- 2 756 204
- DE-U- 8 532 717
- US-A- 4 222 298
- US-A- 4 848 205

## Beschreibung

Die Erfindung betrifft Sägeblätter mit konvex geschliffenen Sägezahnflanken gemäß Oberbegriff von Patentanspruch 1 zur Herstellung von besonders planen und ausbruchsfreien Schnittflächen, beispielsweise bei der Kunststoff- oder Metallbearbeitung; siehe z.B. US-A 4 848 205.

### Stand der Technik

Sägeblätter sind in mannigfaltigen Ausführungsformen bekannt. Dabei kommt der Form der Sägezähne bezüglich der Trenneigenschaften eine besondere Bedeutung zu.

So beschreibt beispielsweise DE-OS 27 56 204 ein Sägeblatt zum gratfreien Trennen von Werkstoffen, dessen Zähne eine Zahnform aufweisen, wobei die Schneidekante der Zähne von einem Ende zum anderen Ende hin ansteigend ausgebildet ist, dadurch gekennzeichnet, daß die Enden der Schneidekanten in der Reihenfolge der Zähne wechselseitig mit einer schrägen Fläche versehen sind, welche Fläche durch einen von der ansteigenden Schneidekante abweichenden Winkel und einen auf die Seitenfläche bezogenen Abstand definiert ist.

In DE-OS 27 53 509 wird ein Motorsägeblatt mit ungeschränkten Zähnen an wenigstens einer Längskante des Sägeblatts beansprucht, dadurch gekennzeichnet, daß die Zähne aus miteinander abwechselnden Grob- und Feinbearbeitungszähnen bestehen, wobei die Feinbearbeitungszähne an den Flanken zentripetal verjüngend geschliffen sind, während die Grobbearbeitungszähne wesentlich dünner und geringfügig länger als die Feinbearbeitungszähne sind. Mit solchen Sägeblättern lassen sich hohe Schnittgeschwindigkeiten realisieren.
DE-OS 25 16 137 umfaßt Kreissägeblätter zum Trennen, Schlitzen oder Nuten von Metallwerkstücken mit unterschiedlich ausgebildeten Vor- und Nachschneidzähnen, die jeweils in einen mittleren und zwei seitliche Abschnitte unterteilte Hauptschneide mit unterschiedlich breitem mittleren Hauptschneidenabschnitt, und die unterschiedliche Einstellwinkel der seitlichen Hauptschneidenabschnitte besitzen. Kennzeichnend ist, daß der auf einem gemeinsamen Schneidenflugkreis liegende mittlere Hauptschneidenabschnitt der Vorschneidezähne breiter als der auf demselben Schneidflugkreis liegende mittlere Hauptschneidenabschnitt der Nachschneidzähne ist und daß der Einstellwinkel der seitlichen Hauptschneidenabschnitte der Nachschneidzähne größer als der Einstellwinkel der seitlichen Hauptschneidenabschnitte der Vorderschneidezähne ist. Mit dieser Sägezahnkonfiguration wird insbesondere die spezifische Belastung der Hauptschneideabschnitte durch die Sägespäne reduziert. Von DE-Gbm 89 12 432.4 wird ein Kreissägeblatt mit in zwei Gruppen verteilten Zähnen umfaßt, wobei Zähne der einen Gruppe auf einem größeren Durchmesser als die der anderen Gruppe gelegen sind, wobei in Umfangsrichtung einem Zahn der einen Gruppe jeweils ein Zahn der anderen Gruppe folgt und wobei die Form der Zähne der einen Gruppe im Querschnitt etwa trapezförmig ist, mit den Kennzeichen, daß die Form der Zähne der anderen Gruppe ebenfalls trapezförmig ist.
In DE-OS 27 06 774 wird ein Kreissägeblatt beschrieben mit Zähnen, deren Zahnform konisch ausgebildet ist und mit der Spitze in radiale Richtung zeigt. Die beiden Schneidflächen der Zähne sind langgezogen von der Spitze in Achsrichtung bis zu einer Länge, die etwa der dreifachen Breite der Zahnbrust entspricht. Durch diese Ausführung wird beim Austritt der Säge aus dem zu sägenden Material eine schälende Wirkung erreicht und die an der Austrittstelle auftretende Splitterwirkung vermieden.

### Aufgabe und Lösung

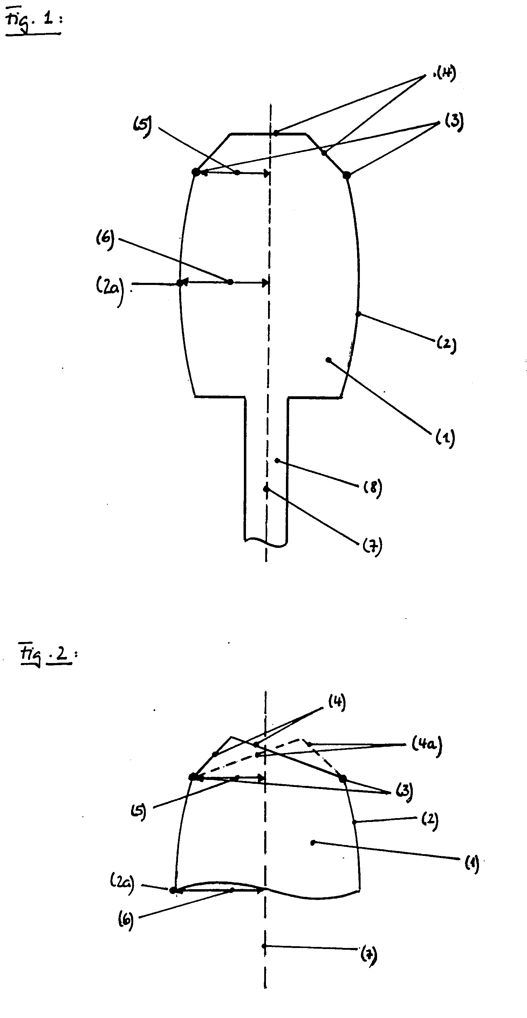

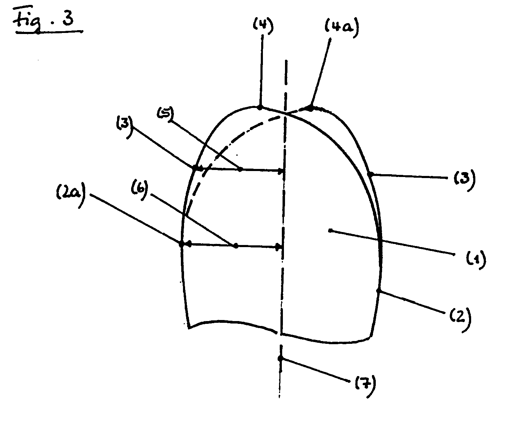

Bei der sägenden Bearbeitung, insbesondere von Kunststoffen, Metallen oder Nichteisen-(NE)-Metallen sind Schnittflächen mit glatter Oberfläche, das heißt die weitgehende Vermeidung von Sägeriefen beim Sägevorgang, von hoher Bedeutung. Mit Sägezahnkonfigurationen, wie sie bei Sägeblättern des Standes der Technik verwendet werden, entstehen solche Sägeriefen in meist ausgeprägter Form und machen eine Oberflächenglättung als Nachbearbeitungsschritt notwendig.
Überraschenderweise wurde gefunden, daß mit den erfindungsgemäßen Sägeblättern mit den Merkmalen gemäß Patentanspruch 1, die die in Fig. 1 dargestellte Sägezahnkonfiguration aufweisen, welche durch das Merkmal einer bogenförmig konvex ausgebildeten Sägezahnflanke (2) charakterisiert wird, Sägeriefen bei der sägenden Bearbeitung von Metallen, NE-Metallen und insbesondere von Kunststoffen weitgehend vermieden werden können. Der Übergang (3) zwischen der Schneidkante (4) des Sägezahns (1) und der Sägezahnflanke (2) ist solchermaßen gestaltet, daß der Abstand (6) zwischen der Mitte (2a) der Sägezahnflanke (2) und der Symmetrieebene (7) des Sägezahns (1) größer als der Abstand (5) zwischen dem Übergang (3) und der Symmetrieebene (7) des Sägezahns (1) ist. Damit wird eine ausgeprägte Kante zwischen Schneidekante (4) und Sägezahnflanke (2), die direkten Kontakt zum Sägegut hätte, vermieden.
Die Ausgestaltung der Schneidekanten (4) des Sägezahns (1) ist sehr variabel. In Fig. 1 weisen die Schneidekanten (4) beispielsweise einen symmetrischen, tetragonalen, trapezförmigen Aufbau auf, wobei solchermaßen gestaltete Sägezähne (1) auf dem Trägerblatt (8) in gleichmäßigen Abständen, wie aus dem Stand der Technik bekannt, angeordnet sind. Dabei können auf dem Trägerblatt (8) auch hintereinander Sägezähne (1) mit verschiedenartig konfigurierten Schneidekanten angeordnet sein. So ist in Fig. 2 beispielsweise ein Sägezahn (1) mit Schneidkanten (4) dargestellt, welche einen trigonalen, asymmetrischen Aufbau aufweisen. Der auf dem Trägerblatt dahinter angeordnete Sägezahn weist Schneidkanten (4a) mit einem bezüglich der Symmetrieebene (7) spiegelbildlichen Aufbau auf, während der nächste Sägezahn wiederum das ursprüngliche Schneidkantenprofil (4) aufweist.
In Fig. 3 ist eine weitere bevorzugte Ausführungsform der Sägezähne (1) dargestellt, bei der das Schneidkantenprofil (4) einen hyperbolischen oder parabolischen Aufbau aufweist und der Übergang (3) zwischen Schneidkante (4) und Sägezahnflanke (2) fließend gestaltet ist. Wiederum weist der auf dem Trägerblatt (8) dahinter angeordnete Sägezahn Schneidkanten (4a) mit einem bezüglich der Symmetrieebene (7) spiegelbildlichen Aufbau auf, während der nächste Sägezahn wiederum das ursprüngliche Schneidkantenprofil aufweist.
Solche Sägeblätter mit wechselnder Schneidkantenkonfiguration an den Sägezähnen sind besonders vorteilhaft bei der sägenden Bearbeitung von Kunststoffen, wenn es darauf ankommt, an beiden beim Sägevorgang resultierenden Sägeflächen eine Oberfläche ohne oder mit nur minimal ausgeprägten Sägeriefen zu erzielen, bei gleichzeitiger Minimierung der Eckenausbrücke des Sägeguts.
Vorzugsweise sind die Schneidkanten (4) der Sägezähne (1) solchermaßen ausgestaltet, daß der Anteil der seitlichen Schneidekanten, die hauptsächlich für den starken Wechsel der Schneidkräfte verantwortlich sind, welcher wiederum das Abbröckeln des Sägeguts an der Schnittkante bewirkt, beim Sägevorgang niedrig ist (vgl. auch DE-Gbm 89 12 432.4).
Die Sägezähne (1) bestehen im allgemeinen aus Materialien, deren Härte deutlich über derjenigen des Sägeguts liegt. Vorzugsweise bestehen die Sägezähne (1) im Korpus aus Hochleistungschnellstählen, wobei die Sägezähne (1) im allgemeinen aus Materialien extrem hoher Härte, wie beispielsweise Diamant, vorzugsweise polykristalliner Diamant, oder Wolframcarbid (Widia) aufgebaut sind. Die Trägerblätter (8) für die Sägezähne (1) bestehen beispielsweise aus legierten Stählen oder Leichtmetall-Legierungen, die wärmebehandelt werden, oder aus denselben Materialien, wie sie für den Korpus der Sägezähne verwendet werden, beispielsweise aus Hochleistungstählen oder Hochleistungsschnellstählen. Im allgemeinen sind zwischen 20 und 200 Sägezähne (1) auf dem Trägerblatt (8) angeordnet.

### Vorteilhafte Wirkungen der Erfindung

Mit der erfindungsgemäßen Sägezahnkonfiguration wird es möglich, Sägeriefen an den Sägeflächen des Sägeguts weitgehend zu vermeiden. Von Bedeutung ist dies bei der sägenden Bearbeitung insbesondere von Metallen, wie beispielsweise Aluminium oder Weichstähle, sowie von Kunststoffen, die für optisch anspruchsvolle Anwendungen eingesetzt werden, wie beispielsweise Polymethacrylaten oder Polyamiden. Vorteilhaft ist auch, daß Sägemaschinen des Standes der Technik in ihrer Konfiguration bei Einsatz von Sägeblättern, die die erfindungsgemäße Sägezahnkonfiguration aufweisen, weitestgehend unverändert bleiben können. Solchermaßen konfigurierte Sägeblätter sind universell einsetzbar, beispielsweise bei Plattenaufteilanlagen oder Kreissägen, in der auf die jeweilige Säge abgestimmten Trägerblattanordnung.

## Patentansprüche

1. Sägeblatt mit auf einem Trägerblatt (Fig. 1, 8) angebrachten Sägezähnen (1) mit Sägezahnflanken (2), und Schneidkante (4)
dadurch gekennzeichnet,
daß die Sägezahnflanken (2) bogenförmig konvex ausgebildet sind und
daß der Übergang (3) zwischen Schneidkante (4) des Sägezahns (1) und der bogenförmig konvexen Sägezahnflanke (2) solchermaßen ausgebildet ist, daß der Abstand (6) zwischen der Mitte (2a) der Sägezahnflanke (2) und der Symmetrieebene (7) des Sägezahns (1) größer als der Abstand (5) zwischen Übergang (3) und der Symmetrieebene (7) ist.

2. Sägeblatt gemäß Anspruch 1, dadurch gekennzeichnet, daß die Schneidkanten (4) einen symmetrischen tetragonalen, trapezförmigen Aufbau aufweisen.

3. Sägeblatt gemäß Anspruch 1, dadurch gekennzeichnet, daß die Schneidkanten (4) einen asymmetrischen trigonalen Aufbau aufweisen.

4. Sägeblatt gemäß Anspruch 1, dadurch gekennzeichnet, daß die Schneidkanten (4) einen hyperbolischen oder parabolischen Aufbau aufweisen und daß der Übergang (3) zwischen Schneidkante (4) und der Sägezahnflanke (2) fließend ausgestaltet ist (Fig. 3).

5. Sägeblatt gemäß den Ansprüchen 1 bis 4, dadurch gekennzeichnet daß auf dem Trägerblatt (8) Sägezähne (1) hintereinander abwechselnd mit verschiedenartig konfigurierten Schneidkanten (4) angeordnet sind.

6. Verwendung der Sägeblätter gemäß den Ansprüchen 1 bis 5 zur sägenden Bearbeitung von Metallen oder Kunststoffen.

## Claims

1. A saw blade with saw teeth (1) with saw tooth flanks (2) and a cutting edge (4) disposed on a carrying blade (Fig. 1, 8), characterised in that the saw tooth flanks (2) are convex-curved and that the transition (3) between the cutting edge (4) of the saw tooth (1) and the convex-curved saw tooth flank (2) is designed so that the distance (6) between the centre (2a) of the saw tooth flank (2) and the plane of symmetry (7) of the saw tooth (1) is greater than the distance (5) between the transition (3) and the symmetry plane (7).

2. A saw blade according to claim 1, characterised in that the cutting edges (4) have a symmetrical tetragonal trapezoid construction.

3. A saw blade according to claim 1, characterised in that the cutting edges (4) have an asymmetrical triagonal construction.

4. A saw blade according to claim 1, characterised in that the cutting edges (4) have a hyperbolic or parabolic construction and that the transition (3) between the cutting edge (4) and the saw tooth flank (2) is designed to be flowing (Fig. 3).

5. A saw blade according to claims 1 to 4, characterised in that saw teeth (1) are arranged behind one another on the carrier blade (8) alternately with variously-configured cutting edges (4).

6. Use of the saw blades according to claims 1 to 5 for the saw-related processing of metals and plastics.

## Revendications

1. Lame de scie comportant une lame de support (Figure 1, 8) portant des dents de scie (1) ayant des flancs de dents (2) et des arêtes de coupe (4),
caractérisée en ce que
- les flancs de dents (2) sont de forme courbe convexe et
- le passage (3) entre l'arête de coupe (4) de la dent de scie (1) et le flanc de dents de scie convexe courbe (2) est réalisé pour que la distance (6) entre le milieu (2a) du flanc de dent de scie (2) et le plan de symétrie (7) de la dent de scie (1) soit supérieur à la distance (5) entre le passage (3) et le plan de symétrie (7)

2. Lame de scie selon la revendication 1,
caractérisée en ce que
l'arête de coupe (4) présente une structure symétrique, tétragonale, trapézoïdale.

3. Lame de scie selon la revendication 1,
caractérisée en ce que
les arêtes de coupe (4) ont une structure asymétrique triangulaire.

4. Lame de scie selon la revendication 1,
caractérisée en ce que
les arêtes de coupe (4) ont une structure hyperbolique ou parabolique et le passage (3) entre l'arête de coupe (4) et le flanc de dent de scie (2) est continu (figure 3).

5. Lame de scie selon les revendications 1 à 4,
caractérisée en ce que
les dents de scie (1) sur la lame de support (8) sont disposées alternativement les unes derrière les autres avec des arêtes de coupe (4) de configurations différentes.

6. Application de lames de scie selon les revendications de 1 à 5 pour scier des métaux et des matières plastique.
